# EUROPEAN PATENT APPLICATION

(11) **EP 1 049 278 A1**
(43) Date of publication of application: **02.11.2000**
(21) Application number: 99108701.6
(22) Date of filing: 30.04.1999
(51) Int. Cl.: H04H 1/00, G06F 9/46, H04N 5/00

(54) **Broadcast API - an application programming interface for accessing information services provided by a broadcast system**

(71) Applicant: Sony International (Europe) GmbH, 10785 Berlin (DE)
(72) Inventor: Schäfer, Ralf, c/o Sony International (Europe)GmbH, 70736 Fellbach (DE); Bittner, Rudolf, c/o Sony International (Europe), 70736 Fellbach (DE)
(74) Representative: MÜLLER & HOFFMANN Patentanwälte

(57) **Abstract**

The present invention relates to an application programming interface (12), API that provides high-level access to information services delivered by a digital broadcast system. In a digital broadcast system information is broadcast from one transmitter to an unlimited number of receivers. A receiver has no means to ask for information at the transmitter. Instead, a receiver listens to what is broadcast and filters relevant information.

The present invention provides an API (12) that provides a functional view of accessing information services provided by a digital broadcast system thereby hiding the details of the underlying system. It comprises a request sub-interface (16) defining all respective functions of building blocks within the API (12) that can be requested by a client (4). The building blocks provide means for selecting a broadcast source (7), means for monitoring of reception conditions (10), a service directory means (6), means for selecting services (8), means for accessing the content of services (9), means for scanning all available services (11) and means for registration of clients (5). Furtheron, the API (12) comprises the definition of a confirmation and notification sub-interface (17) through which a client (4) can get information from the API (12).

## Description

The present invention relates to an interface for applications to use information services offered by a digital broadcast system. More particularly, the present invention relates to an application programming interface (in the following also called API) to control a broadcast system receiver and to provide access to the content carried in the channels of a broadcast signal.

In the following the background of the present invention will exemplary be described in connection with the DAB standard, "Radio broadcasting systems; Digital Audio Broadcasting (DAB) to mobile, portable, and fixed receivers", ETSI, ETS 300 401, Mai 1997, Second Edition, which is an international standard for implementing a digital broadcast system which supports transmission of a variety of information services from a sender side to an arbitrary number of receiver sides. Examples of said information services are audio stream applications, video stream applications, hypertext applications, picture or text slideshow applications, newsticker applications, Java-based applications and the like.

One DAB broadcast signal provides simultaneous access to information which is transmitted at a speed of about 1.5 MBit/s. Such a signal is called an ensemble. One DAB receiver is able to receive more than one ensemble at the same location, but just one at a time. Each ensemble may represent a DAB signal with just one service or up to a large number of services. An ensemble can combine services carrying different application types. A typical example is an ensemble which provides access to several radio stations (audio stream application) and some information services like weather, finance, events and news which are provided as hypertext applications or slideshows. In general, all these services can be accessed simultaneously if they belong to the same ensemble.

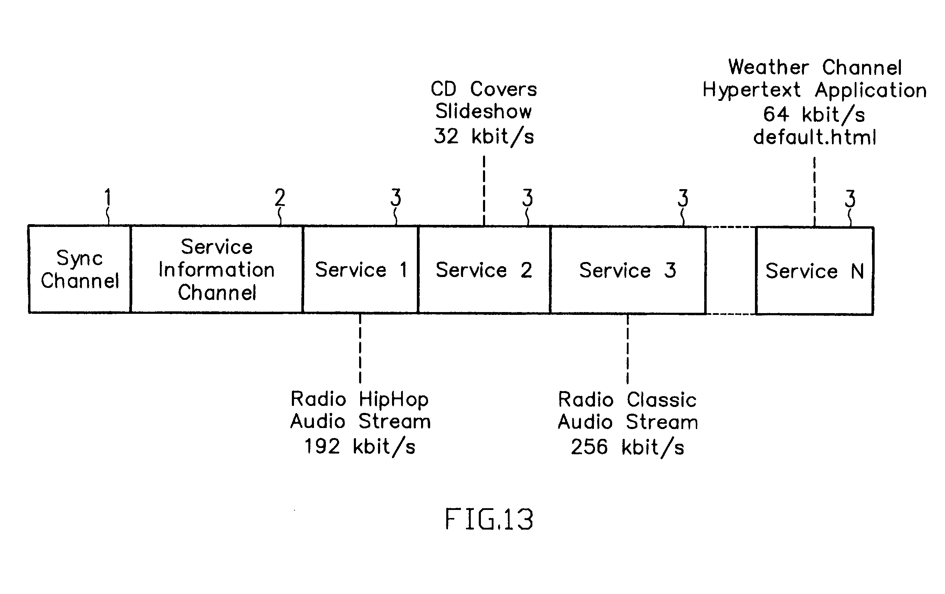

Figure 13 shows the general structure of one time-frame of a broadcast source signal. This time-frame is repeated with a certain period, e.g. 24 ms. It consists of a synchronization channel 1, a service information channel 2 and a certain number of service channels 3. A digital broadcast system receiver uses the synchronization channel to synchronize on the signal. The service information channel 2 provides information about the number of available services, the type of information provided by these services and how to access them. Each service channel 3 carries the data of a service. Usually this data is encoded in a certain format appropriate for broadcasting of data.

The DAB System is designed for reception in stationary, portable and mobile environments. Especially in mobile environments reception conditions might change very often. The reception quality can range from undisturbed reception via occasional disturbances to no reception at all. This is something a hardware or software application has to deal with. Reception disturbances are part of the mobile environment and should be hidden from the user as long as possible. It is not adequate to handle each reception disturbance as an error. Therefore an application needs some means to monitor the reception conditions in order to react properly.

In a bi-directional communication environment a client requests a certain piece of information. The delivered information is identified by the current context state between client and server. In an unidirectional broadcast environment, on the other hand, information for a large number of clients is transmitted. Therefore the data has to be self-descriptive in order to provide a means to filter relevant information only. This information is typically provided in the service information channel 2 if the provided information is related to the service as a whole and is provided in one of the service channels 3 if the provided information is related to any of the information objects of the respective service. Every service information channel 3 uses a system-specific format for the delivered information.

Therefore, it is an object underlying the present invention to provide a broadcast receiver system that hides the system-specific encoding scheme and offers the provided information in a system independent manner to an application.

This object is solved by an application programming interface according to claim 1 and a client according to claim 31, preferred embodiments thereof are respectively defined in the dependent claims.

The API and client according to the present invention implement the functionality of a bi-directional communication environment to the client/ broadcast receiver interface of an unidirectional broadcast receiver, since it is allowed for a client to address requests to the API via the unique request sub-interface of the API that defines the whole functionality of the API and it is allowed for the API to send confirmation and/or notification messages that can also comprise the requested information to a client via the confirmation and notification sub-interface that is defined by the API.

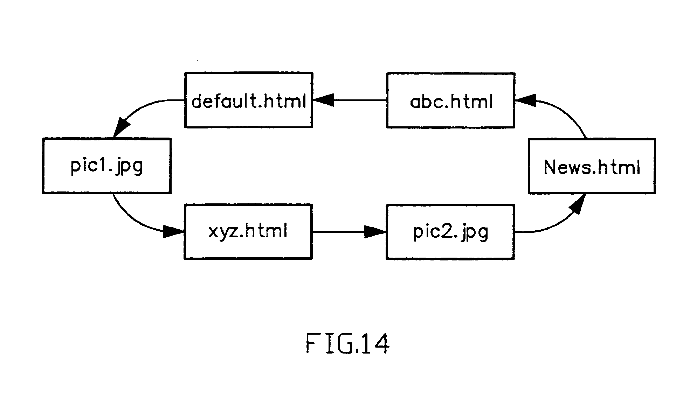

The organization of the access of a service depends on the carried service type. In case of a service with type audio stream like a radio programme all the transmitted data has to be received and delivered to the application for processing. In case of applications where the user is free to navigate through a set of information objects (e.g. hypertext applications), all information is broadcast cyclically and only requested information is filtered from the broadcast. An exemplary data carrousel is shown in Fig. 14 that shows that certain documents, namely default.htm1, pic1.jpg, xyz.htm1, pic2.jpg., News.htm1 and abc.htm1 are broadcasted cyclically. In case of a slideshow application which provides a sequence of pictures or text to the user the information is sent when it is to be presented or several times in advance in order to handle reception disturbances. In the latter two cases the task of an application programmer or designer is simplified if support for application processing is given.

In a hypertext application a request for a certain HTML page is given to the API after a link referring to this page has been clicked. The underlying system of the API according to the present invention sets a filter for this page and listens until it is broadcast. After reception the page is delivered to the application. The request might be cancelled after reception or the API can still listen to the broadcast and notify the application about updates of requested pages. This application processing support provided by the API is particularly valuable when more than one application is accessing the service simultaneously or when caching is considered. In the latter case a memory is used in order to store copies of received objects in order to improve the access time. Therefore an application can profit if an underlying API provides the access of a service.

It can be seen that the present invention provides an application programming interface for accessing information services provided by a broadcast system. It is a so-called high-level API which means its concepts expressed as commands are intended to reflect the needs of an application programmer or designer. The task of an application programmer or designer in this field is to provide information services in an attractive manner. For this reason an application programmer or designer is not interested in unnecessary, system-specific details. According to the present invention, a high-level API improves the development time of an application and increases acceptance to build an application by a third party, since a bi-directional communication environment is built.

Additionally the API covers all aspects of accessing information services provided by a broadcast system. This means controlling of a digital broadcast system receiver which is needed to get access to the broadcast medium and to the content of its provided services itself.

In a broadcast system a client does not request for needed information at the transmitter. Instead the receiver has to listen to what is broadcast and to filter wanted information. In general the configuration of a broadcast signal can change at any time and the access time to an information object can vary to a much greater extent than in a information system that is based on bi-directional communication. These requirements are broadcast system specific. The API according to the present invention hides these details from an application programmer and provides support for processing of information services in different presentation formats. A client connected to the API according to the present invention can request needed information and as soon as this information is available it gets delivered to the requesting client. The interface of the API is based on asynchronous messaging which fits very well to the high degree of system-initiated communication between an application programm and the broadcast system controlled by the API.

The API provides support for several clients simultaneously. This means more than one client can use the services of the API and thereby share resources.

The following detailed description of the present invention is given in connection with a DAB receiver in which the API according to the present invention is realized in a C/C++ language solution that is very descriptive for the functionality of the API. Of course, this invention can also be applied to other broadcast systems and have other solutions, e. g. a hardware solution for the API.

The functional decomposition of controlling a digital broadcast system receiver in the given example is as follows: Selection of a broadcast source, access to the service information channel, selection of services, access to service content and monitor reception conditions.

Controlling a digital broadcast system receiver means that communication is only unidirectional from service provider to service consumer. A receiver has to listen permanently to what is broadcasted and to filter wanted information. Any changes to the broadcast data are detected by listening to the broadcast. New services can be added and others removed. Objects in a data carrousel of a service can be added, removed or updated. The access time for an object broadcast in a data carrousel can vary to a great extent ranging from a few milliseconds to several minutes. The API according to the present invention considers this by a message-based approach.

The present invention will be better understood from the detailed description of an exemplary embodiment thereof taken in conjunction with the accompanying drawings, wherein
- **Fig. 1**: shows a reference model of a digital broadcast system receiver comprising an API according to an exemplary embodiment of the present invention,
- **Fig. 2**: shows command patterns according to the present invention,
- **Fig. 3**: shows the interfacing of API and API client according to an advantageous embodiment of the present invention,
- **Fig. 4**: shows the client registration according to an embodiment of the present invention,
- **Fig. 5**: shows the tune command messaging according to an embodiment of the present invention,
- **Fig. 6**: shows the search command messaging according to an embodiment of the present invention,
- **Fig. 7**: shows the selectreceptioninfo command messaging according to an embodiment of the present invention,
- **Fig. 8**: shows the selectserviceinfo command messaging according to an embodiment of the present invention,
- **Fig. 9**: shows the selectservice command messaging according to an embodiment of the present invention,
- **Fig. 10**: shows the slideshow processing according to an embodiment of the present invention,
- **Fig. 11**: shows the hypertext service processing according to the present invention,
- **Fig. 12**: shows the scan command messaging according to an embodiment of the present invention,
- **Fig. 13**: shows the model of a broadcast source signal according to the DAB standard, and
- **Fig. 14**: shows a conventional broadcast data object carrousel.

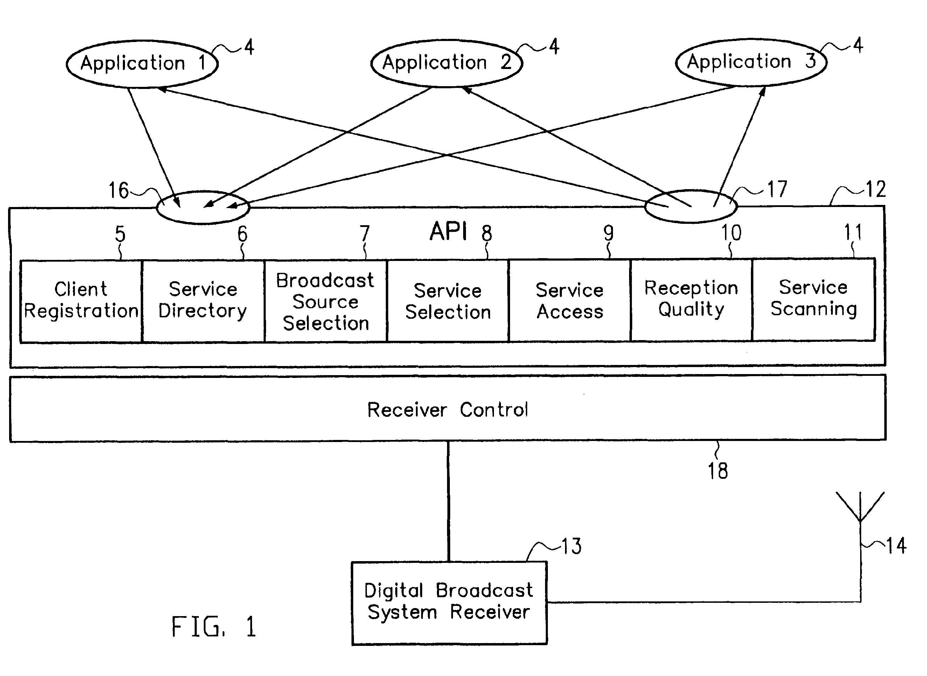

Figure 1 shows the reference model for the present invention covering several application programs 4 that are in the following also called API clients which use the API 12 to provide broadcast information services to the user. The API 12 itself uses a digital broadcast system receiver 13 e. g. with an antenna 14 to get access to the broadcast data by means of a receiver control block 18. The generic structure of the API 12 itself is as follows. The receiver control block 18 provides low-level control of the connected digital broadcast system receiver 13. The figure shows the receiver control block 18 and the digital broadcast system receiver 13 in separate blocks which are somehow connected, but the present invention is not limited to this embodiment. It is also possible to have this part integrated in one block. For the present invention it is important that all the building blocks 5 - 11 shown above the Receiver Control block 18 are based on the services provided by the receiver control block 18.

In this shown preferred embodiment, the API comprises the following building blocks 5 to 11:
- A client registration block 5 provides a registration service for API clients. Every application program that wants to use the API has to register in advance as an API client. Registration provides each API client with a Client Id which is used with all subsequent commands in order to identify different clients.
- A service directory block 6 provides information about available services of one or more broadcast sources.
- A broadcast source selection block 7 is responsible for directly tuning to a broadcast source or provides means to search for a broadcast source.
- A service selection block 8 is used to start or stop a service.
- A service access block 9 provides means to access the content of a service.
- A reception quality block 10 provides means to monitor the reception quality.
- A service scanning block 11 allows a client to search for all available services in all available broadcast sources of a specified search area thereby updating the service directory and notifying clients of changes related to subscribed information.

In general, every command is split up into two or three message types. Request messages (-)Req are sent by an API client to the API and request execution of a command. Confirmation messages (-)Cnf are sent by the API to an API client and confirm execution of a command. Notification messages (-)Ntf are sent by the API to the API client in order to inform about progress with long lasting commands or to provide updated information.

Every application program 4 sends its requests regarding needed information via a request sub-interface 16 of the API 12 to one or several of the building blocks 5 to 11 which provide their information through a confirmation and notification sub-interface 17 to an applicant 4/client.

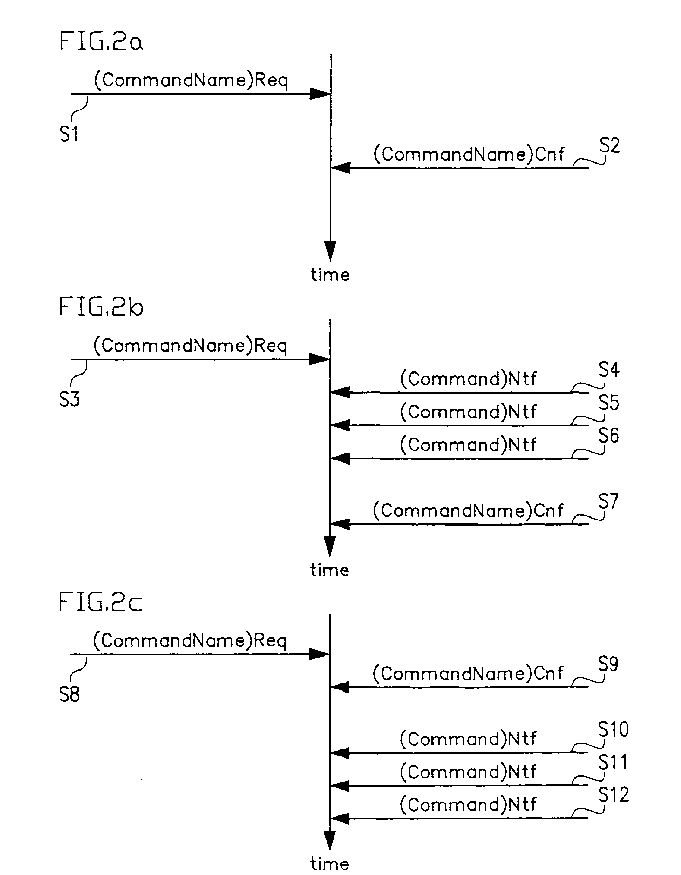

Figure 2 shows that according to the present invention three different combinations of these messages are used to form a command.

Figure 2a shows the Req-Cnf command pattern in which a request message is sent in a step S1 to the API, the command is executed and a confirmation message sent in a step S2 to the client provides the result of execution.

Figure 2b shows the Req-Ntf-Cnf command pattern that is used for commands which take a large amount of time. The request message is sent to the API in a step S3, the command is started and in this example three notification messages provide progress information to the client in steps S4 to S6. The confirmation message provides the result of the execution to the client in step S7.

Figure 2c shows the Req-Cnf-Ntf command pattern that is used for commands which provide a subscription service. In this case the request message asks the API in step S8 for delivery of certain information, e.g. reception quality. The subscription is confirmed with a confirmation message from the API 12 to the requesting client in a step S9. The requested information itself is provided with notification messages, in this example with three notification messages in steps S10 to S12. It starts with notification messages which report the current state and proceeds with notification messages sent whenever the subscribed information changes. This subscription service is running until it is cancelled by another command execution. It is also possible to ask only for the current state and not for updates if this is not needed. In this case the subscription service is automatically cancelled with delivery of the requested information by the related notification message.

The term message as used in this description has to be distinguished to a command which provides as a whole a benefit to the application programmer or designer and the execution of a command. The execution is divided in several messages which are sent between API12 and API client in order to provide means for an asynchronous interfacing. Thereby commands can be executed concurrently and an API client is not blocked when performing a long-lasting command. This fits well with the above mentioned characteristics of a digital broadcast system receiver 13. The use of the term message does not limit the scope of the present invention on implementations which connect API and API client by a message-system.

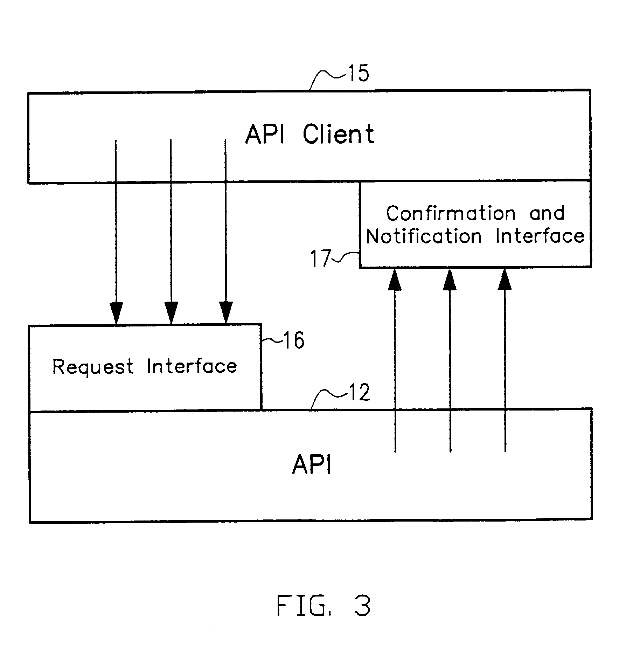

Figure 3 shows an appropriate model for the interfacing of API 12 and API client 15 which is used for the following description of the invention. The interfaces are defined by the API 12, but the implementation of the request interface 16 is provided within the API 12 and of the confirmation and notification interface 17 is provided with the API client 15. In the following exemplary embodiment each interface is realised as an interface with function entry points. This means for every message one function is provided which is called by API client 15 for request messages and by API 12 for confirmation and notification messages.

As mentioned above, the following description of the API is provided in the descriptive C/C++ program language notation. This is not intended to limit the scope of the invention. As mentioned above, any other programming language like Java, Pascal, Basic and so on or a hardware solution could be used instead.

The following API conventions are applied in the description:

A large E as a postfix denotes an enumeration type. An enumeration type allows to define several symbolic names for different constant values.
A large T as a postfix denotes a data type. This can be a type with means to store values in variables only or a type which additionally includes functions to perform some processing.
A large PT as a postfix denotes a pointer to a data type.

Variables of a certain data type have a prefix in order to denote its data type: A small e denotes a variable with an enumeration type. A small b denotes a variable of type bool. Other data types which are specially defined for the domain of the present invention are denoted by a small t. Variables which are used as formal parameters in function signatures have an additional underscore as the first character.

The following basic data structures are used throughout the API:
ResultE - Used whenever the status of a command execution is to be reported. The mapping of this type depends on the underlying system the API is used for. In general, it is used as an enumeration type, which allows to define several symbolic names for different constant values. Each of this values represent another status of command execution. A common set of values is defined as follows:
resOK - Command successfully executed
resInvalidParameter - Command could not be executed due to an invalid parameter.
resNonApplicableFunction - Command can not be executed in the current state.

This is only an exemplary basic set of error codes. In a broadcast information system this set can easily be extended with more detailed error codes depending on the system capabilities without any inventive skill.

ClientldT - Used as a data type for identification of API clients. The internal structure of this data type is dependent on the actual implementation. The data type must be defined by the underlying system of the API. Every API client gets an Id of this type when connecting to the API and is used with all subsequent commands to identify different clients.

ServiceldT - Used as a data type for identification of broadcast information services. The internal structure of this data type is dependent on the actual implementation. The data type must be defined by the underlying system of the API. Services are reported with their Service Id and other attributes by the service directory provided by the service directory block 6. An API client uses the Service Id to get information about a service, to start or stop a service.

ObjectldT - Used as a data type for identification of information objects, e.g. Hypertext pages, images and so on. The internal structure of this data type is dependent on the actual implementation. The data type must be defined by the underlying system of the API 12. The Object Id is used by an API client to request objects for delivery and to identify delivered objects.

ObjectT - Used as a data type which provides access to the content of one information object and to any additional attributes relating to the object, e.g. an expiration time or textual description of a picture. The internal structure of this data type is dependent on the actual implementation. The data type must be defined by the underlying system of the API 12. Every Object is identified by an Object Id.

bool - boolean data type which can take the values true and false.

Some parameters in the following function signatures are written in italic style. These parameters are strongly related to the underlying system of the API 12. This means that a detailed definition of these data types would go beyond this description due to the strong dependency of the underlying system. One broadcast system may provide means to monitor a biterrorrate, another system a synchronization state, a third one a set of these or other parameters. An appropriate way to map the systems dedicated requirements might be to use one, two or more parameters. In such cases a parameter is written in italic style in order to show the need to add the precise data type definition. It will be apparent to those skilled in the are that modifications may be made to the definitions of command messages without departing from the scope of the invention.

The following example shows the interface definitions for the Request Interface 16 and the Confirmation Interface 17:

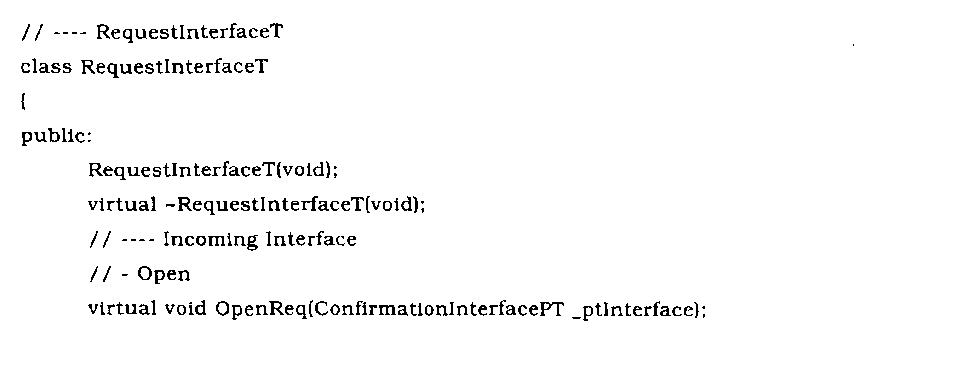

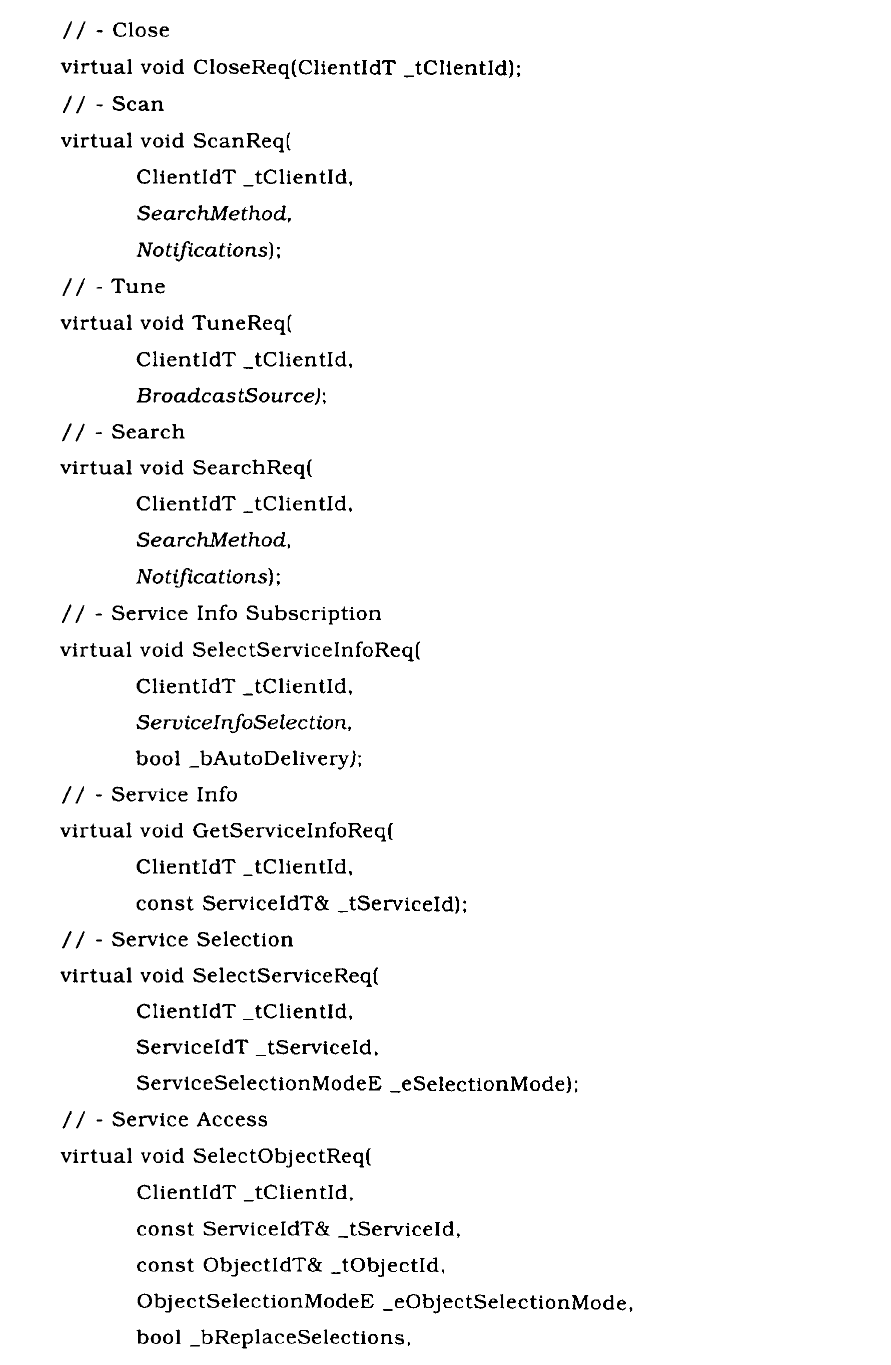

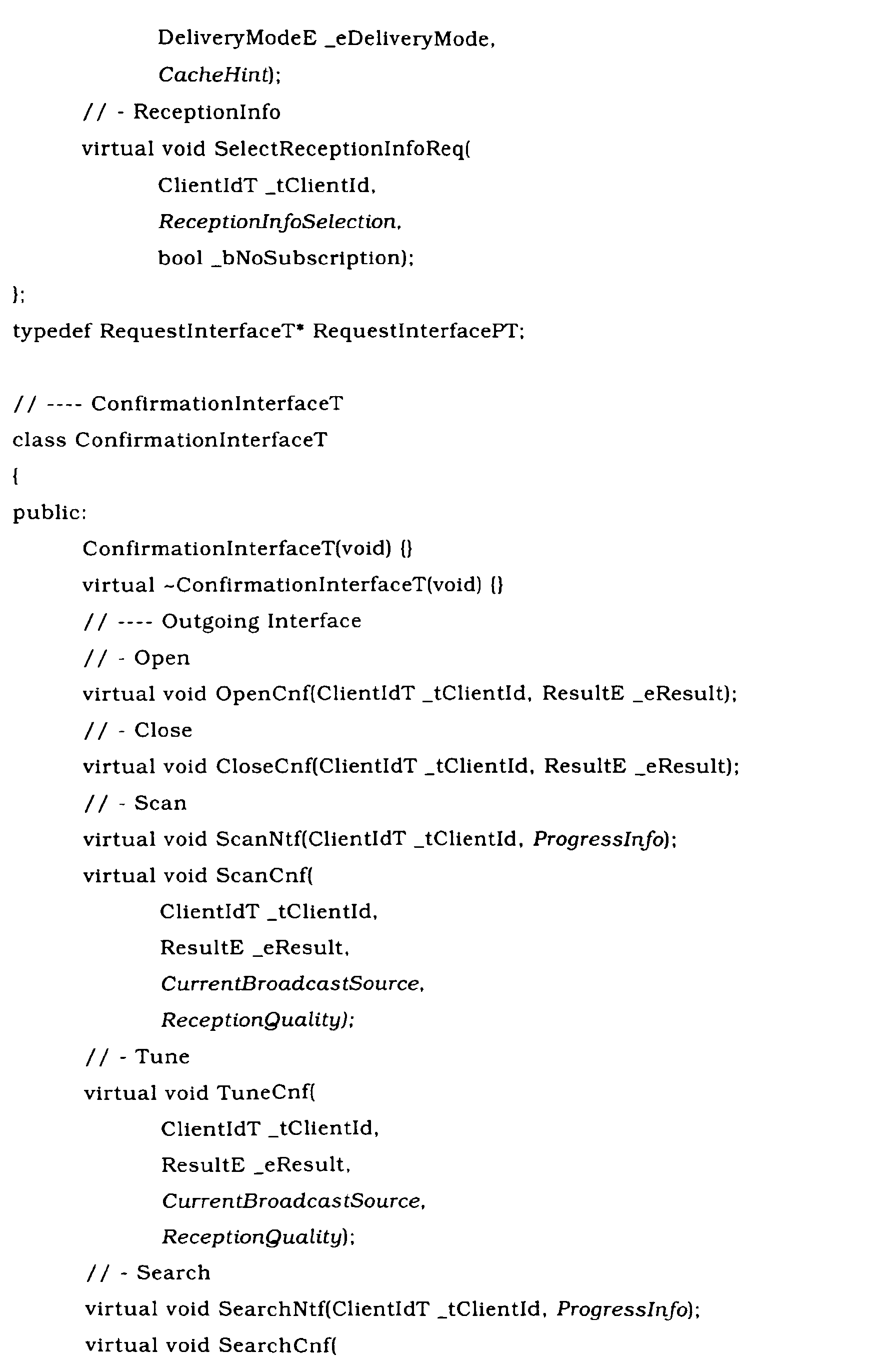

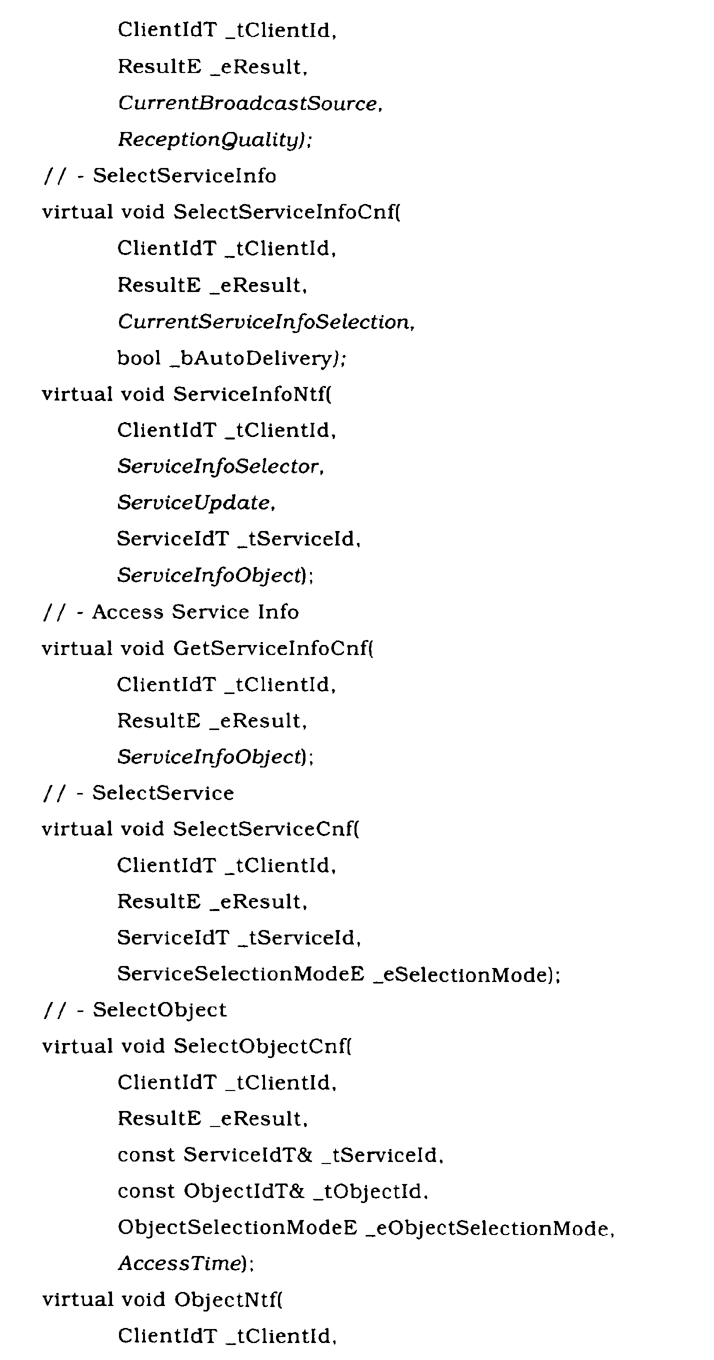

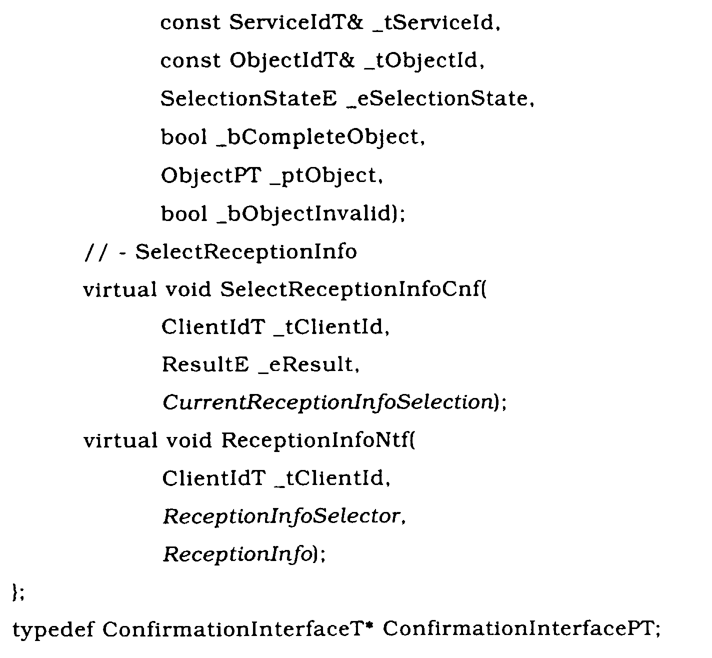

Two instances of an API client 15 and the API 12 connect via these interfaces. This means the API 12 provides an implementation to its Request Interface 16 which is used by the API Client 15 to send request messages to the API 12 by calling the interface functions of its Request Interface 16. The API Client 15 provides an implementation to its Confirmation Interface 17 which is used by the API 12 to send confirmation and notification messages to the API client 15 by calling the interface functions of its Confirmation Interface 17.

In the following all commands and message functions are explained in detail. Typical examples of using command messages are illustrated in message sequence charts. These show simple scenarios without considering any malfunction. Only parameters which are important in the described context are listed.

### Client Registration

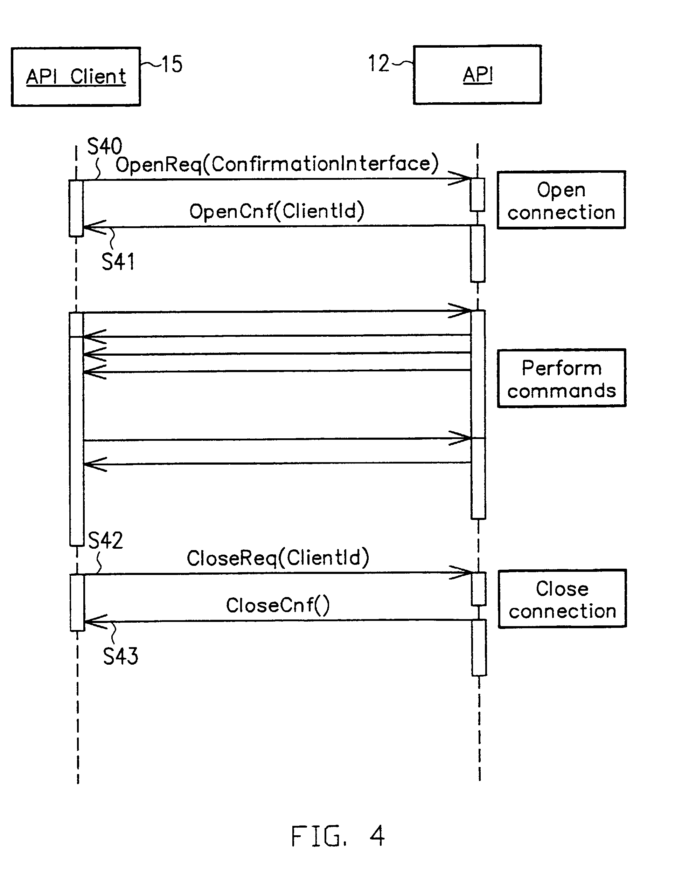

Any application program which wants to use the API 12 has to connect to the API 12 as an API client 15 before performing any other commands and has to disconnect when it is finished using API commands, as it is shown in figure 4.

Such a registration and disconnection is performed via the client registration block 5. The Open command registers a client 15, allocates all necessary resources and provides a client Id which is to be used with all subsequent commands. Identification is necessary in case of more than one client is using the API 12 simultaneously. The Open command is built by the OpenReq and OpenCnf message. The Close command stops all running services, releases resources which have been aquired for the calling client and disconnects API client and API. In order to perform further API commands an Open command has to be performed in advance. The Close command is built by the CloseReq and CloseCnf message. Inbetween the open and close commands the API client 15 is able to perform a control of the digital broadcast system receiver 13 via the API 12 or just to "listen" to the provided service, i. e. to perform commands.

The interfaces of the Open and Close command message functions are defined as as follows:
void OpenReq(ConfirmationInterfacePT_ptInterface)
void OpenCnf(ClientIdT_tClientId, ResultE_eResult)

void CloseReq(ClientIdT_tClientId)
void CloseCnf(ClientIdT_tClientId, ResultE_eResult)

First, to open a connection, the OpenReq message is sent by the API client 15 to the API 12 in step S40 and provides a pointer (_ptInterface) to the confirmation interface 17 of the client 15. The API sends all confirmation and notification messages resulting from the communication between API client 15 and API 12 to this interface.

Thereafter, processing of the Open command is reported by an OpenCnf message in step S41 which is sent by the API 12 to the API client 15. The parameter _eResult indicates if a connection could be established. In case of a value of resOK the connection is established and the parameter _tClientId provides a valid Id which is to be used for all subsequent commands. In case of any other value reported by _eResult the Open command failed and no connection is established. The parameter _tClientId has no valid value in this case.

Finally, after commands have been performed and when the client 15 is finished using API commands the client 15 sends a CloseReq message to the API 12 in step 42 to close the connection. The only parameter for this message is the client Id in order to identify the calling client. The API 12 then reports processing of the Close command by sending a CloseCnf message to the client 15 in step S43. The parameter _tClientId identifies the addressed client and _eResult indicates the result of processing. In case of a value of resOK the connection has been closed successfully, otherwise an error has occurred.

### Selecting a broadcast source

In order to get access to the content provided by a digital broadcast system receiver, a client 15 selects a broadcast source via the broadcast source selection block 7. In general a broadcast source can be selected directly or a digital broadcast receiver 13 has some means to search for a broadcast source automatically. Therefore two commands are provided.

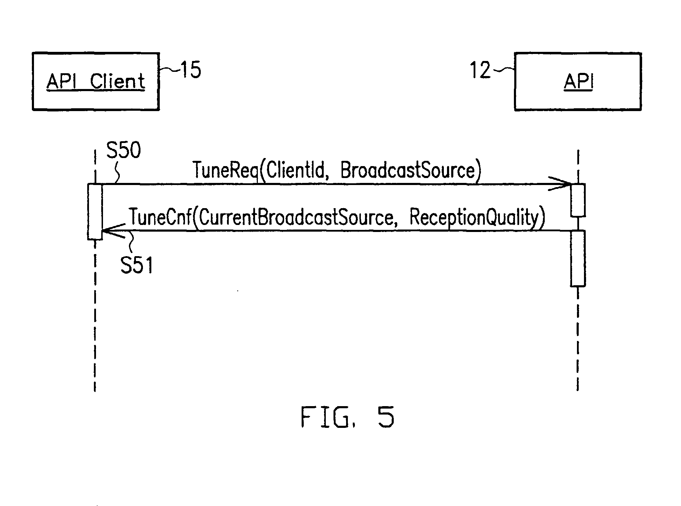

The Tune command selects directly a broadcast source. It is assumed that the client 15 knows where the broadcast source is located and that all necessary parameters are provided by the client 15. The Tune command is built by the TuneReq and TuneCnf message functions as shown in figure 5.

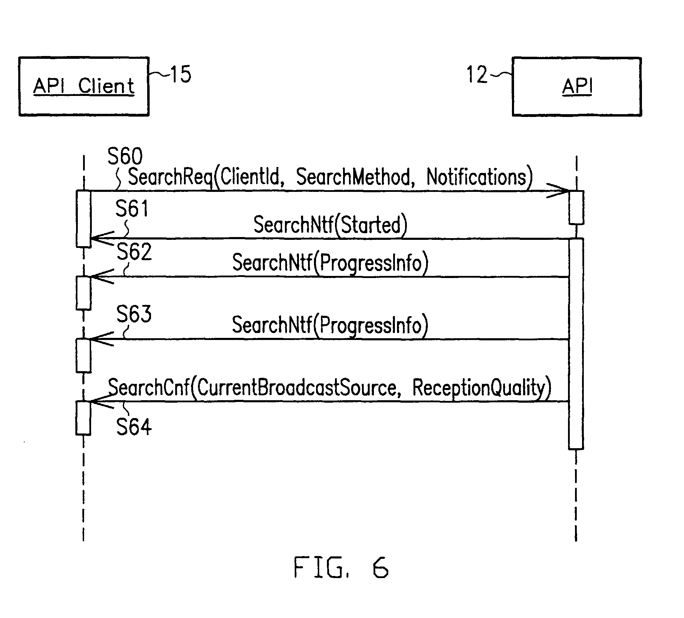

The Search command searches for a broadcast source. The search method can be specified by the client 15, e.g. frequency range, frequency step and direction or is performed automatically by the API 12. It is assumed that a search can take a large amount of time. Therefore progress information is given as long as the search is lasting. The Search command is built by the SearchReq, SearchNtf and SearchCnf message functions as shown in figure 6.

The interfaces of the Tune and Search command message functions are defined as as follows:
void TuneReq(ClientIdT_tClientId,
*Broadcas tSource)*
void TuneCnf(ClientIdT_tClientId,
ResultE _eResult,
*CurrentBroadcastSource,*
*Reception Quality)*
void SearchReq(ClientIdT _tClientId,
*SearchMethod,*
*Notifications)*
void SearchNtf(ClientIdT _tClientId,
*ProgressInfo)*
void SearchCnf(ClientIdT _tClientId,
ResultE _eResult,
*CurrentBroadcastSource,*
*ReceptionQuality)*

The API client 15 sends a TuneReq message to the API 12 in order to start a Tune command in step S50. The parameter _tClientId identifies the API client 15. The broadcast source is specified by one or several parameters *(BroadcastSource).* Tuning to the specified broadcast source is started after reception of the message by the API 12. After tuning is performed the current reception quality is detected. Then, processing of the command is reported by a TuneCnf message from the API 12 to the API client 15 in step S51. It identifies the addressed client (_tClientId) and indicates the processing result (_eResult). In case of a successful processing the parameter _eResult shows a value of resOK, otherwise an error has occurred. Independent from the processing result the currently selected broadcast source (*CurrentBroadcastSource*) and the current reception quality (*ReceptionQuality*) is reported.

The API client 15 sends a SearchReq message to the API 12 in order to start a Search command in step S60. The parameter _tClientId identifies the API client 15. The search method is specified by one or more parameters *(SearchMethod).* A search can take a large amount of time. Therefore a client might request progress information during the search operation. Therefore the parameter *Notifications* allows to specify wanted notification types, e.g. after each frequency step.

Thereafter, the API 12 uses the SearchNtf message in order to provide the client 15 with progress information in steps S61 to S63. The parameter _tClientId identifies the addressed client. The progress information is delivered as one or more parameters (*ProgressInfo*). The first delivered notification in step S61 indicates that the search has been started. Any other events to be notified depend on the underlying system of the API.

Finally, the API 12 reports completed processing of the search command by sending a SearchCnf message to the client 15 in step S64. The parameter _tClientId identifies the addressed client 15 and _eResult indicates the result of processing. In case of a value of resOK the command was successful and a broadcast source has been found, otherwise an error has occurred. In any case the currently selected broadcast source (*CurrentBroadcastSource*) and the current reception quality (*ReceptionQuality*) is reported.

With the selection of a broadcast source the client 15 has access to all information services belonging to this broadcast source. In order to get access to the information services of another broadcast source, the other broadcast source has to be selected in advance.

### Monitoring Reception Conditions

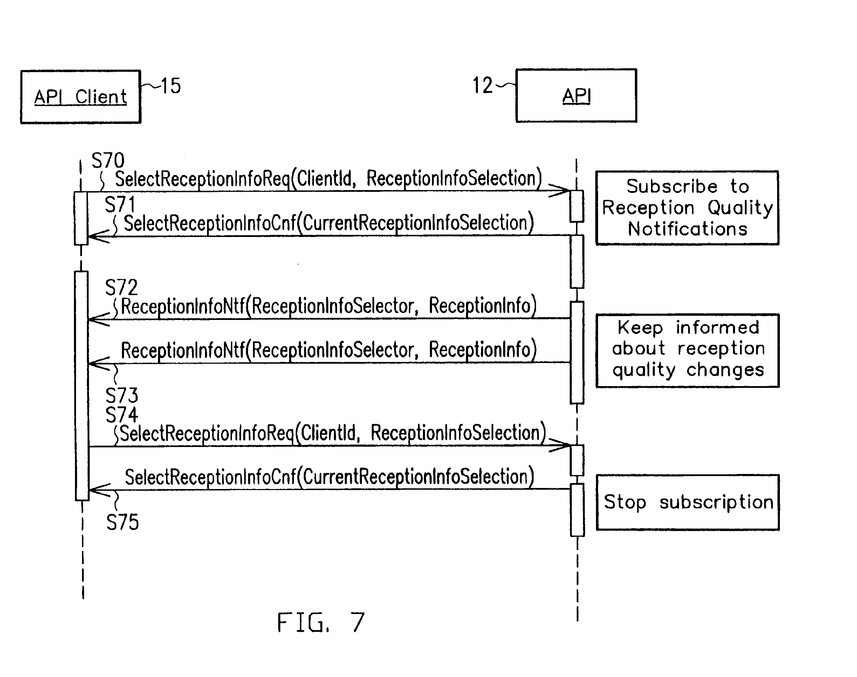

A client 15 that wants to monitor the reception conditions uses the SelectReceptionInfo command that is realized within the reception quality block 10. The SelectReceptionInfo command is build by the SelectReceptionInfoReq, SelectReceptionInfoCnf and ReceptionInfoNtf messages, as shown in figure 7. It provides a subscription service to state changes related to reception conditions. This means a client that subscribes to this service by use of SelectReceptionInfoReq and SelectReceptionInfoCnf messages gets a notification message ReceptionInftNtf each time the reception conditions change until the subscription is cancelled by the client. Also it is possible to request just once for reporting the current reception conditions.

The interfaces of the SelectReceptionInfo command message functions are defined as as follows:
void SelectReceptionInfoReq(ClientIdT _tClientId,
*ReceptionInfoSelection,*
bool _bNoSubscription)
void SelectReceptionInfoCnf(ClientIdT _tClientId,
ResultE _eResult,
*CurrentReceptionInfoSelection*)
void ReceptionInfoNtf(ClientIdT _tClientId,
*ReceptionInfoSelector,*
*ReceptionInfo*)

First, to subscribe to reception quality notifications, the API client 15 sends a SelectReceptionInfoReq message to the API 12 in order to start a SelectReceptionInfo command in step S70. The parameter _tClientId identifies the API client 15. The type of information to be monitored is specified by the parameter *ReceptionInfoSelection,* e.g. synchronization state, biterrorrate or whatever is an appropriate set of parameters for the underlying system. It is possible to select all offered parameters, only a subset or none for monitoring. The parameter _bNoSubscription specifies if the information is delivered just once to the client 15 or if a subscription service is started in which each state change in one of the selected parameters is reported. The subscription service is started by selecting some parameters to monitor for the first time. The subscription service is stopped by selecting none of the offered parameters. Also it is possible to change the set of parameters to be monitored.

Thereafter, the API 12 confirms the request by sending a SelectReceptionInfoCnf message to the client 15 in step S71. The parameter _tClientId identifies the addressed client and _eResult indicates the result of processing. In case of a value of resOK the command was successful, otherwise an error has occurred. The current selection for monitoring reception conditions is reported by the parameter *CurrentReceptionInfoSelection.In* case of selecting any of the offered parameters for monitoring, the requested information is following as one ReceptionInfoNtf message. If the information has been requested just once by setting _bNoSubscription to true then no other ReceptionInfoNtf messages will follow. If a subscription service has been started by setting _bNoSubsciption to false then each state change of any one of the selected parameters is reported by a ReceptionInfoNtf message.

In the following, to keep the client 15 informed about reception quality changes, the ReceptionInfoNtf message is sent by the API 12 to the client 15 in steps S72 and S73. The parameter _tClientId identifies the addressed client. The message reports about state changes of one or more parameters from the previously selected parameters for monitoring. The parameter *ReceptionInfoSelector* indicates which parameter are to be updated. The updated values itself are provided by the parameter *ReceptionInfo.* In case of a subscription service the initial states of 5 all selected parameters are provided with the first ReceptionInfoNtf message. All following ReceptionInfo messages provide information about state changes of selected parameters. In case of a one-time request the current states of all selected parameters are provided with the first and only ReceptionInfoNtf message.

Finally, to stop the subscription, the client 15 sends a SelectReceptionInfoReq message to the API 12 in step S74 which gets confirmed from the API 12 by sending SelectReceptionInfoCnf message to the client 15 in step S75. The parameters of these both messages are defined as in steps S70 and S71 described above.

### Accessing Service Directory

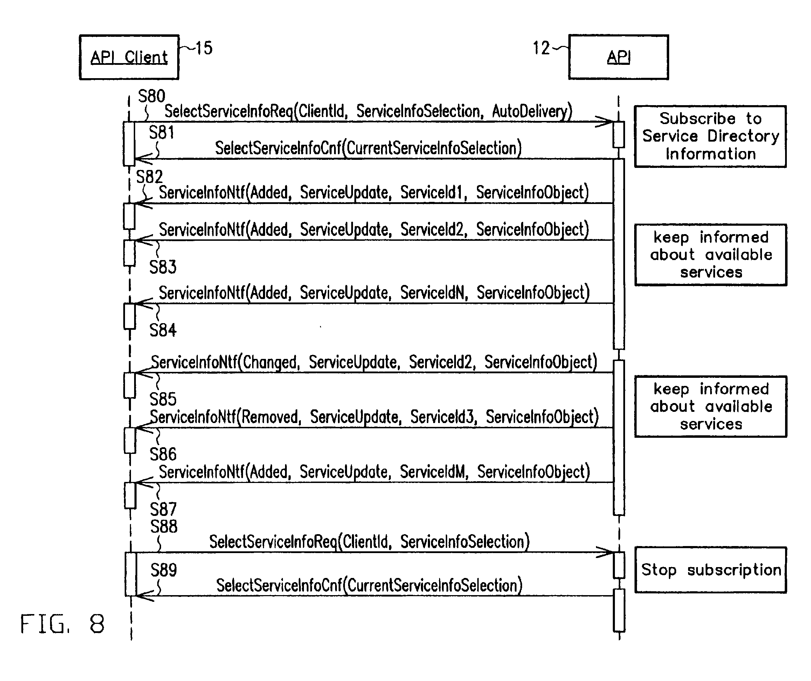

The service directory provided by the service directory block 6 provides information about all known services belonging to the current or other broadcast sources. It depends on the strategy of the underlying system how reliable this information is. Although the information about available services is transmitted in the broadcast source signal, it is possible that due to temporary reception disturbances or off-line operation the service directory provided by the service directory block 6 is not completely uptodate. But as soon as the receiver is connected the information will be updated and each connected client 4 is informed about changes. Also it is not possible for an underlying system with one broadcast source receiver to monitor changes which occur in other broadcast sources. This information is updated the next time when this broadcast source is visited or when the Scan command is performed. The access to the service directory provided by the service directory block 6 is organized in a distributed way which fits to the dynamic nature of the service directory. It is designed as a subscription service by use of the SelectServiceInfo command where information is delivered to the client in pieces as notification messages, e.g. if a new service is available, the existence of the service and its attributes are reported to the client. Immediately after startup the content of the service directory provided by the service directory block 6 is mapped on said notification messages and later changes are reported in the same way. The SelectServiceInfo command is built by the SelectServiceInfoReq, SelectServiceInfoCnf and ServiceInfoNtf messages as shown in figure 8.

The interfaces of the SelectServiceInfo command message functions are defined as as follows:
void SelectServiceInfoReq(ClientIdT _tClientId,
*ServiceInfoSelection,*
bool _bAutoDelivery)
void SelectServiceInfoCnf(ClientIdT _tClientId,
ResultE _eResult,
*CurrentServiceInfoSelection,*
bool _bAutoDelivery)
void ServiceInfoNtf(ClientIdT _tClientId,
*ServiceInfoSelector,*
*Service Update,*
ServiceldT _tServiceId,
*ServiceInfoObject*)

To subscribe to service directory information, the API client 15 sends a SelectServiceInfoReq message to the API 12 in order to start a SelectServiceInfo command in step S80. The SelectServiceInfo command starts, stops or changes a subscription service to changes in the service directory provided by the service directory block 6. The parameter _tClientId identifies the API client 15. The service directory provided by the service directory block 6 might supply information of different categories, e.g. services with audio stream applications or services with data services like slideshows. Therefore a client can customize the type of information the client is interested in by use of the parameter *ServiceInfoSelection.* A minimum set of events which must be supported are dscServiceElementAdded, dscServiceElementRemoved and dscServiceElementChanged. The value dscServiceElementAdded indicates that a new service element is available. The value dscServiceElementRemoved indicates that a service element is removed and therefore no longer available. The value dscServiceElementChanged indicates that the attributes of a service element have changed, e.g. a textual information describing a service or an information which describes the current type of content delivered by a service is changed together with the content. In the latter case the parameter ServiceUpdate of the ServiceInfoNtf message informs about the changes in more details. Depending on which events are specified with the parameter *ServiceInfoSelection* the API 12 sends ServiceInfoNtf messages related to these events. The last parameter _bAutoDelivery specifies if the client 15 is just informed about changes in the service directory provided by the service directory block 6 (set to false) or if also the changed information itself is provided together with the change notification (set to true).

Thereafter, the API 12 sends a SelectServiceInfoCnf message to the client 15 in order to confirm processing of the SelectServiceInfo command in step S81. The parameter _tClientId identifies the addressed client and _eResult indicates the result of processing. In case of a value of resOK the command was successful, otherwise an error has occurred. The parameter *CurrentServiceInfoSelection* indicates the current subscription level to changes in the service directory. The parameter _bAutoDelivery indicates if just a change to a certain element in the service directory is reported (set to false) or if the changed information itself is also provided (set to true). If the subscription service has been started, then all information known to the service directory provided by the service directory block 6 is provided as ServiceInfoNtf messages.

To keep the client 15 informed about available services, the ServiceInfoNtf message is sent by the API 12 to the client 15 in steps S82 to S87. The parameter _tClientId identifies the addressed client. Directly after starting the subscription service the complete content of the service directory coinciding with the selections made by the client 15 is mapped on ServiceInfoNtf messages and delivered to the client 15. After this, only changes to the service directory are reported by sending ServiceInfoNtf messages. The parameter _tServiceId identifies the service element of the service directory provided by the service directory block 6 which has been changed. The parameter *ServiceInfoSelector* specifies the event which is the reason for this notification. The supported set of events depends on the underlying system of the API 12, but it has to support at least the above mentioned events dscServiceElementAdded, dscServiceElementRemoved and dscServiceElementChanged. The parameter *ServiceUpdate* indicates in case of a dscServiceElementAdded event about which optional parts of a service element are known and in case of a dscServiceElementChanged event which parts of a service element have changed. The parameter *ServiceInfoObject* carries the changed information object itself. It is delivered only if the subscription service has been setup for this mode by specifying the parameter _bAutoDelivery in the SelectServiceInfoReq message accordingly. Otherwise an additional command has to be performed in order to get the information object.

Therefore the command GetServiceInfo is provided. It is built by the GetServiceInfoReq and GetServiceInfoCnf messages.

The interfaces of the GetServiceInfo command message functions are defined as as follows:
void GetServiceInfoReq(ClientIdT _tClientId,
ServiceIdT _tServiceId)
void GetServiceInfoCnf(ClientIdT _tClientId,
ResultE _eResult,
*ServiceInfoObject*)

The API client 15 sends a GetServiceInfoReq message to the API 12 in order to start a GetServiceInfo command. The GetServiceInfo command requests for delivery of information about a specified service element. The parameter _tClientId identifies the API client 15. The service element is identified by the parameter _tServiceId.

The API 12 confirms the request by sending a GetServiceInfoCnf message to the client 15. The parameter _tClientId identifies the addressed client and _eResult indicates the result of processing. In case of a value of resOK the command was successful, otherwise an error has occurred. The parameter *ServiceInfoObject* carries the requested information object representing the service element. The complete definition of said object is depending on the underlying system which is accessed through the API 12.

Finally, to stop the subscription, the client 15 sends a SelectServiceInfoReq message to the API 12 in step S88 which gets confirmed from the API 12 by sending a SelectServiceInfoCnf message to the client 15 in step S89. The parameters of these both messages are defined as in steps S80 and S81 described above.

### Selecting Services

In order to get access to the content of services it is necessary to start a service in advance. The ServiceSelection block 8 of the underlying system of the API allocates needed resources and starts listening to what is broadcast in this service. It may use caching techniques to store broadcast objects in a memory in order to improve the access time for requested objects by API clients 15.

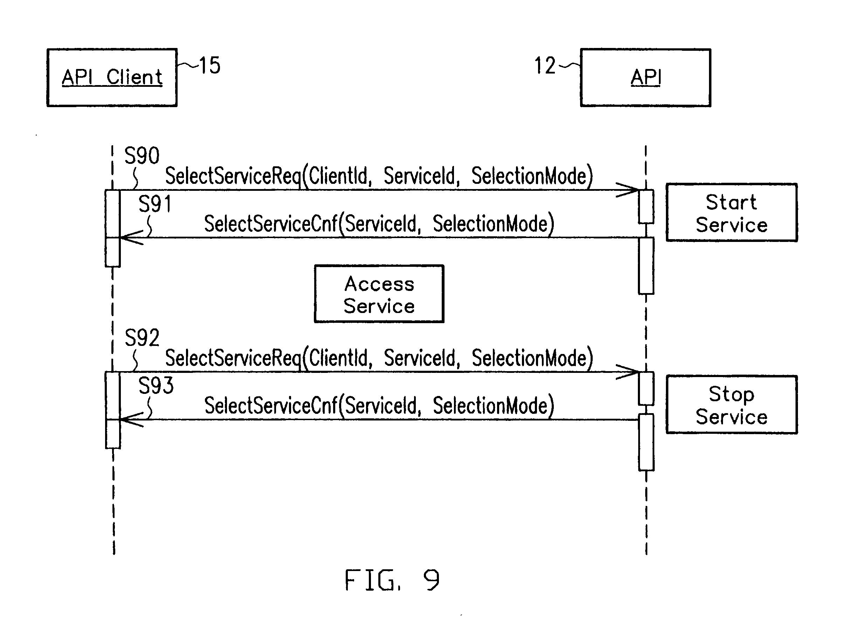

An API client 15 starts or stops a service by use of the SelectService command. The SelectService command is built by the SelectServiceReq, SelectServiceCnf and ServiceInfoNtf messages as shown in figure 9. Every service is identified by its Service Id. The client 15 knows about services by accessing the service directory provided by the service directory block 6. Besides starting and stopping of a service it is supported to stop all currently running services and start a new service in one command. In a broadcast system it is always possible that a service is terminated. A client is informed about this by ServiceInfoNtf messages. This means if a service termination is reported and a service is currently selected then it is automatically stopped with delivery of the relating ServiceInfoNtf message.

The interfaces of the SelectService command message functions are defined as as follows:

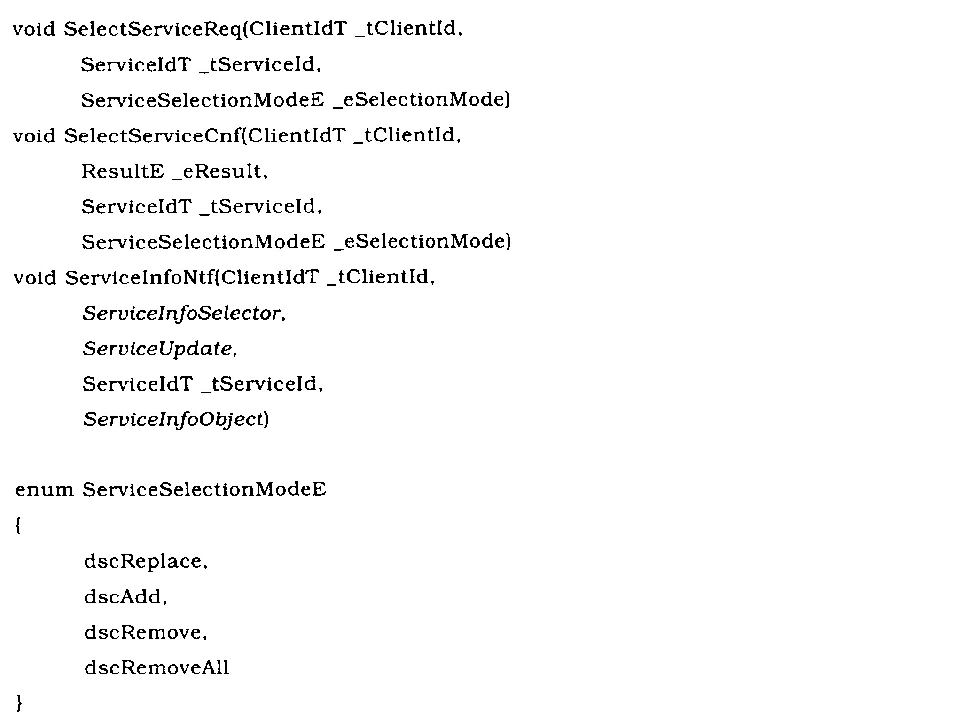

To start a service, the API client 15 sends a SelectServiceReq message to the API 12 in order to start a SelectService command in step S90. The parameter _tClientId identifies the API client 15. The service is identified by the parameter _tServiceId. The parameter _eSelectionMode specifies the selection mode of the specified service. The following modes are supported. The value dscReplace stops all currently running services and starts the service specified by _tServiceId. The value dscAdd starts the service specified by _tServiceId and leaves all currently started ones untouched. The value dscRemove stops the service specified by _tServiceId only. The value dscRemoveAll stops all started services.The parameter _tServiceId has no meaning in the last case.

Then, the API 12 confirms processing of the command by sending a SelectServiceCnf message in step S91. The parameter _tClientId identifies the addressed client and _eResult indicates the result of processing. In case of a value of resOK the command was successful, otherwise an error has occurred. The parameter _tServiceId identifies the service which has been selected according to the selection mode specified by the parameter _eSelectionMode. The meaning of the parameter _eSelectionMode is the same as used with the SelectServiceReq message.

During the access of a service, in case that a started service is to be removed from the broadcast, the API client 15 is informed about this change by sending a ServiceInfoNtf message from the API 12 to the API client 15 as described in connection with steps S82 to S87 shown in figure 8. The parameter _tClientId identifies the addressed client. The parameter *ServiceInfoSelector* indicates a dscServiceElementRemoved event in this case. The service element is identified by the parameter _tServiceId. The parameter *ServiceInfoObject* has no meaning when a dscServiceElementRemoved element is notified.

Finally, to stop the service, the client 15 sends a SelectServiceInfoReq message to the API 12 in step S92 which gets confirmed from the API 12 by sending a SelectServiceInfoCnf message to the client 15 in step S93. The parameters of these both messages are defined as in steps S90 and S91 described above.

### Accessing Services

A broadcast service can provide information in several ways. In the following the different ways are described in the terms of application types.

### Local-Interactive Applications:

Local-Interactive applications provide information in pieces e.g. a user of a hypertext application navigates through the offered information by reading currently presented information and following hyperlinks to further information. Every hypertext page contains textual information, embedded objects like images in different formats and links to other hypertext pages or objects in other formats. In a broadcast system these information objects are transmitted in a cyclical manner. Which information object is currently needed depends on the user interaction.

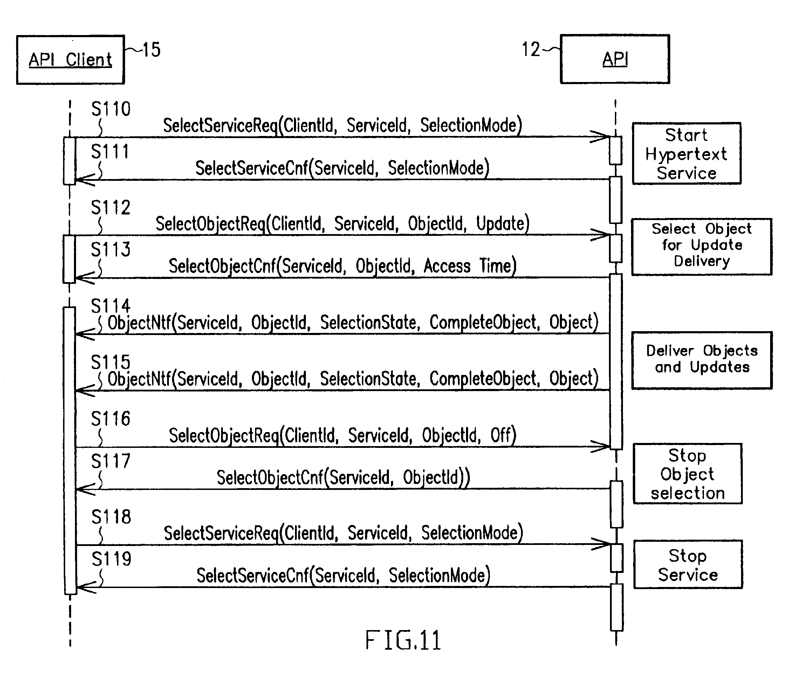

For all applications which require explicit requesting of objects the API 12 provides by use of the service access block 9 a SelectObject command which requests delivery of a specified information object. It can be used after the related service is started by use of the SelectService command. The SelectObject command is built by the SelectObjectReq, SelectObjectCnf and ObjectNtf messages, as shown in figure 11, and provides a subscription service. It is possible to request just a one-time delivery or it is possible that the object is selected for update delivery. This means the object is delivered after the first time it is available and every update of the object is additionally reported until the selection is cancelled. Besides selecting and deselecting an object it is possible to remove all current selections and select another one in one command. Another parameter allows to specify if only the completely received object is to be delivered or if also parts might be provided. In the latter case all already received data of the object which is complete from the beginning is delivered. The first delivery is followed by several deliveries. With every delivery the delivered object is a little bit more complete. Another parameter is a hint by the application how important this information object is to the application.

### Slideshow Applications:

Slideshow applications provide information in a way which is predefined by the application itself, e.g. a Picture slideshow presents a sequence of pictures where the presentation point in times are predefined. A simple method to realize a picture slideshow is to broadcast a picture when it is to be presented. In this case no additional signalling is needed. A more sophisticated way is to broadcast a picture several times before the presentation point in time in order to make provision for transmission errors. This increases the probability of proper reception of the presentation object before the presentation point in time has come.

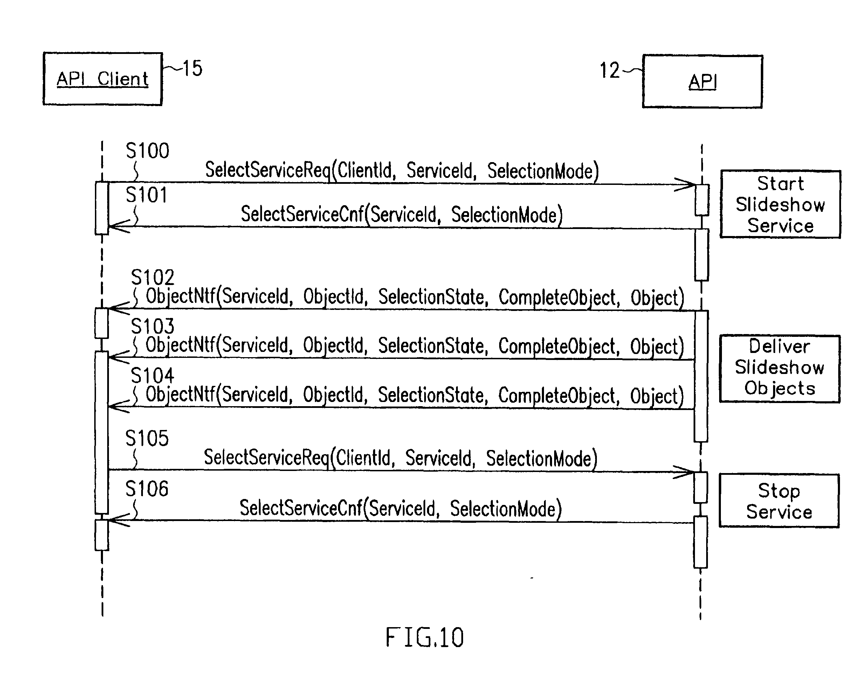

For all applications where the presentation point in time is predefined the API 12 cares about decoding, storing and invoking presentation of the object at the proper presentation point in time. After a service with said application is started every object to be presented is delivered as an ObjectNtf message, as shown in figure 10, by the API 12 to the API client 15 when the presentation point in time has come. Additionally the ObjectNtf message is used to signal that an object which is currently presented is no longer valid for presentation.

### Streaming Applications:

Streaming applications provide a continuos data stream which is permanently fed to a decoder provided by an application program, e.g. audio or video streams. After a service with said application is started it is critical that the data is delivered in-time because any data that is late is useless. The API provides a similar application processing support for streaming applications as for slideshow applications, as shown in figure 10. When a service carrying a streaming application is started ObjectNtf messages are sent which carry buffers containing data from the continuos data stream. This data has to be fed to the application program decoder. In order to compensate for jitter in delivery an application might use a first-in first-out queue to store ObjectNtf messages. When this queue is filled up to a predefined number of messages for the first time the application decoder is started. After the application decoder has processed the data of one message it is fed with the next one. Any following ObjectNtf message delivered by the API is added to the first-in first-out queue.

### Built-In Processing for Applications:

A real broadcast system may provide built-in processing/processor for certain application types, e.g. a built-in audio decoder processes continuos audio stream applications. The built-in processing of said applications is controlled by use of the SelectService command which starts or stops processing of the service. No support by the SelectObject command is needed in this case. The interfaces of the SelectObject command message functions included in the service access block 9 are defined as follows:

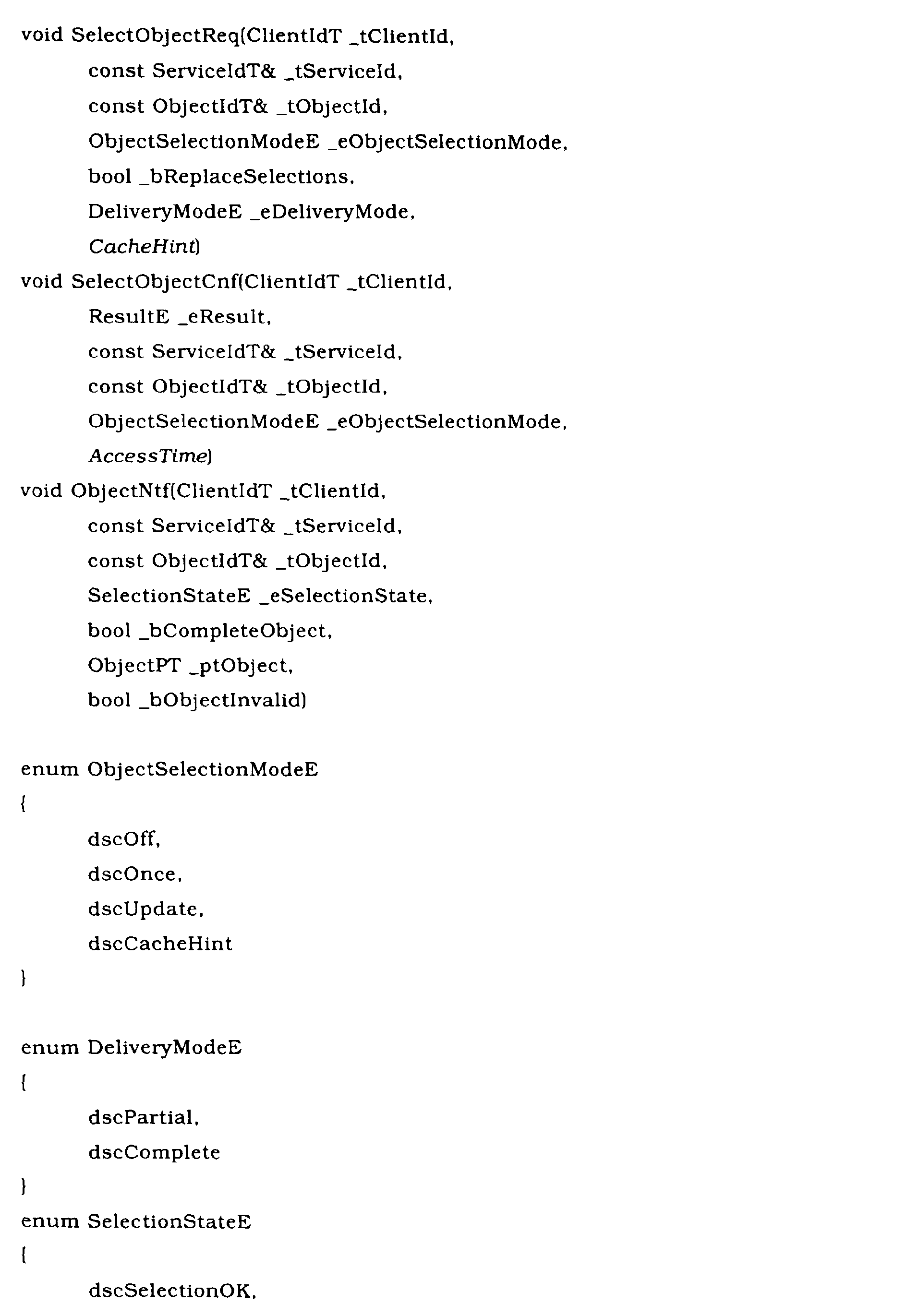

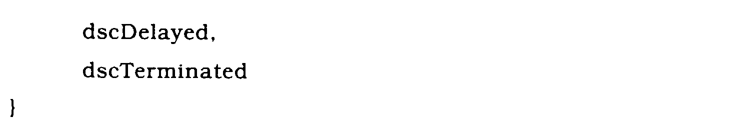

Figure 11 shows that after the start of a service with a SelectServiceReq message from the API client 15 to the API 12 and the confirmation of the command of the API 12 by sending a SelectServiceCnf message to the client in steps S110 and S111 which are carried out as described above in connection with figure 9, the SelectObject command can be started.

Thereafter, the API client 15 sends a SelectObjectReq message to the API 12 in order to start the SelectObject command in step S112. The parameter _tClientId identifies the API client 15. The object to be selected is identified by the parameter _tObjectId. The service to which the object is belonging is identified by the parameter _tServiceId. The parameter _eObjectSelectionMode specifies the selection mode of the specified object. The following modes are supported. The value dscOnce requests one-time delivery of the specified object. The value dscUpdate requests delivery of the specified object and delivery of every update of the object until the selection is cancelled. The value dscOff cancels an existing object selection. The value dscCacheHint specifies that the SelectObject command is used only to provide a hint to the API how important this object is for the client. In this case the object is not selected for delivery. The importance is specified by the parameter *CacheHint.* With some application types like hypertext applications it is convenient to select a new object and cancel all existing selections belonging to the same service with one command. This is supported by use of the parameter _bReplaceSelections. If this parameter is set to true all currently existing selections belonging to the specified service by _tServiceId are cancelled. If this parameter is set to false all currently existing selections are not changed. The parameter _eDeliveryMode set to dscComplete specifies that the selected object is delivered after complete reception of the object. The parameter _eDeliveryMode set to dscPartial specifies that the selected object may be delivered in parts. This means for an object consisting of an ordered sequence of bytes ranging from index 1 to n that a first delivery provides the partly received object comprising the ordered sequence of bytes ranging from index 1 to m where m is not larger than n. A following delivery provides the ordered sequence from 1 to 1 where 1 is larger than m but not larger than n and so on. This ends when an object is delivered where all data ranging from 1 to n is delivered.

The parameter *CacheHint* specifies a hint by the API client 15 to the API 12 for caching. Caching uses a fast, local memory in order to store copies of broadcast objects. This helps to improve the access time of objects in case that a requested object is already stored in the Cache memory. The parameter *CacheHint* provides a hint to the API for the selections of objects to cache. The precise definition of the parameter depends on the underlying system. One example is to use a priority parameter with a range from 0..100 where 0 means lowest importance and 100 means highest importance for the client. The hint for caching is valid with every object selection mode dscOff, dscOnce, dscUpdate and dscCache.

Then, the API 12 confirms processing of the command by sending a SelectObjectCnf message to the client 15 in step S113. The parameter _tClientId identifies the addressed client and _eResult indicates the result of processing. In case of a value of resOK the command was successful, otherwise an error has occurred. The parameter _tServiceId identifies the service the selected object is belonging to. The parameter _tObjectId identifies the selected object. The current selection mode of the specified object is given by the parameter _eObjectSelectionMode. The parameter *AccessTime* provides the access time for the object which means the expected delay until the selected object itself is provided by use of an ObjectNtf message.

To deliver objects and updates, a selected object, e.g. a local-interactive application, an object to be presented, e.g. a slideshow application, or an object carrying a segment of a continuos data stream, e.g. a streaming application, is delivered from the API 12 to an API client 15 by sending an ObjectNtf message, like it is shown in steps S114 and S115. The parameter _tClientId identifies the addressed client. The parameter _tServiceId identifies the service the object is belonging to. The parameter _tObjectId identifies the object. The parameter _eSelectionState reports the current selection state of the object and is used only in local-interactive applications. The following states are supported. The value dscSelectionOK means that the object is delivered with this message and can be accessed by the parameter _ptObject. The value dscDelayed means that the object delivery is delayed in comparison to what was indicated by the relating SelectObjectCnf message. The parameter _ptObject has no meaning in this case.

The value dscTerminated means that the object is no longer broadcast and it can not be delivered. The parameter _ptObject has no meaning in this case and the selection is removed. The parameter _bCompleteObject indicates if the object is delivered completely with this message or partly. If the parameter is set to true the complete object is delivered. If the parameter is set to false it is delivered partly as described above. The parameter _bObjectInvalid indicates if the presentation of a slideshow object which has been delivered to the application for presentation before must be stopped. If the parameter is set to true the presentation of the object has to be stopped, e.g. a picture has to be removed from the display. In this case the parameters _eSelectionState, _bCompleteObject and _ptObject have no meaning. If the parameter is set to false the meaning of the other parameters determine the meaning of the message.

To stop the object selection, the client 15 sends a SelectObjectReq message to the API 12 in step S116 which gets confirmed from the API 12 by sending a SelectObjectCnf message to the client 15 in step S117. The parameters of these both messages are defined as in steps S112 and S113 described above.

Finally, to stop the service, the client 15 sends a SelectServiceReq message to the API 12 in step S118 which gets confirmed from the API 12 by sending a SelectServiceCnf message to the client 15 in step S119. The parameters of these both messages are defined as in steps S110 and S111 described above.

Figure 10 shows that slideshow objects can also be delivered directly after the start of a service with a SelectServiceReq message from the API client 15 to the API 12 and the confirmation of the command of the API 12 by sending a SelectServiceCnf message to the client in steps S100 and S101 which are carried out as described above in connection with figure 9 without any SelectObject command. In this case information is delivered from the API 12 to an API client 15 by sending an ObjectNtf message, like it is shown in steps S102 to S104 which are defined as described above in connection with steps S114 and S115. Thereafter, to stop the service, the client 15 sends a SelectServiceReq message to the API 12 in step S105 which gets confirmed from the API 12 by sending a SelectServiceCnf message to the client 15 in step S106. The parameters of these both messages are defined as in steps S100 and S101 described above.

### Scanning for Services in all available broadcast sources

In order to get an overview of all available services in a broadcast environment the Scan command is provided. After a request of the Scan command to the service scanning block 11 via the request interface 16 a search for all available broadcast sources is started and one after another broadcast source is selected in order to find out which services are available in each broadcast source. The results are stored in the service directory provided by the service directory block 6 and can be accessed by the clients 15. During the processing of the command it is possible that no other services can be accessed. This depends on the connected broadcast receiver 13. If it provides access to only one broadcast source at a time, then no other access is possible.

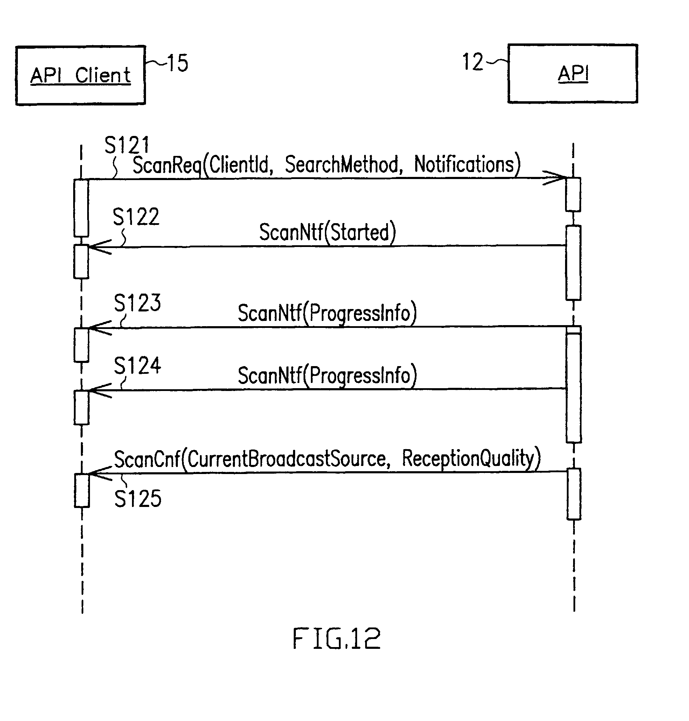

The search method can be specified by the client 15, e.g. frequency range, frequency step and direction or is performed automatically by the API 12. It is assumed that a scan can take a large amount of time. Therefore progress information is given as long as the scan is lasting. The Scan command is built by the ScanReq, ScanNtf and ScanCnf message functions, as shown in figure 12. While the Scan command is running and if the API client 15 has subscribed to notifications from the service directory ServiceInfoNtf messages are sent from the API 12 to the API client 15 in order to inform about changes in the service directory.

The interfaces of the Scan command message functions are defined as as follows:
void ScanReq(ClientIdT _tClientId,
*SearchMethod,*
*Notifications*)
void ScanNtf(ClientIdT _tClientId,
*ProgressInfo*)
void ScanCnf(ClientIdT _tClientId,
ResultE _eResult,
*CurrentBroadcastSource,*
*Reception Quality)*

First, the API client 15 sends a ScanReq message to the API 12 in order to start a Scan command, as shown in step S121. The parameter _tClientId identifies the API client 15. The search method is specified by one or more parameters (*SearchMethod*). A scan can take a large amount of time. Therefore a client might request progress information during the scan operation. Therefore the parameter *Notifications* allows to specify wanted notification types, e.g. after each frequency step.

Thereafter, the API 12 uses the ScanNtf message in order to provide the client 15 with progess information, as shown in steps S122 to S124. The parameter _tClientId identifies the addressed client. The progress information is delivered as one or more parameters (*ProgressInfo*).

Finally, the API 12 reports completed processing of the scan command by sending a ScanCnf message to the client 15 in step S125. The parameter _tClientId identifies the addressed client 15 and _eResult indicates the result of processing. In case of a value of resOK the command was successful and a broadcast source has been found, otherwise an error has occurred. In any case the currently selected broadcast source (*CurrentBroadcastSource*) and the current reception quality (*ReceptionQuality*) is reported.

With the selection of a broadcast source the client 15 has access to all information services belonging to this broadcast source. In order to get access to the information services of another broadcast source, the other broadcast source has to be selected in advance, but the service directory provided by the service directory block 6 can provide information about all services from all broadcast sources. This allows to built an application programm which offers a list of all services to the user. If the user selects a service from the currently selected broadcast source only a SelectService command has to be performed. If the user selects a service from another broadcast source two alternatives may be provided. The API client 15 selects the broadcast source by use of the Tune command first and selects then the service by use of the SelectService command or the API automatically performs a Tune command in advance if a SelectService command is performed for a service from another broadcast source.

Although the present invention has been exemplary described with one embodiment realized in C/C++ language, it is clearly to be understood that this is no limitation and only used to clearly explain the functionality of the API according to the present invention. A realization in any other programming language or a hardware realization is also possible and shows the same functionality. The API 12 and/or the client 15 can be realized within a broadcast receiver or as separate devices. If they are realized as a software they can either be resident within the broadcast receiver or the respective separate device or downloaded from a channel of a broadcast system or another server that can be accessed by the broadcast receiver or the respective separate device.

In the following the likely usage of a broadcast API according to the present invention is described for some existing broadcast systems.

A standard FM-Radio without RDS (Radio Data System) has one user interface. This means only client is using the Broadcast API simultaneously in order to provide access to the FM-Radio to the user. With FM-Radio one gets normally access to several broadcast sources (Frequency Range 88 MHz up to 108 MHz). Every broadcast source provides only one audio service. Processing for the audio service is built-in which means no Service Access support by the API is needed. With the selection of the broadcast source automatically the one and only audio service is started (Service Selection) and automatically processing of the audio data starts (Service Access). In mobile environment the reception quality varies to a great extent. Nevertheless it exists a broad range of radios from very cheap ones to high-end radios. Monitoring reception quality is sometimes provided and sometimes not.

Audio Services have no attributes like Ids, Labels, Programme Type and so on. Therefore it is not possible to create a Service Directory from the FM-Signal.

A FM-Radio with RDS is the same system as described above but with additional data sent together with the FM-Signal in order to give further information about the audio service. Additional Information comprises Id (Oxd999) , Label ("SWF 3"), Programme Type ("Pop"), Announcement Support and Switching (spoken Traffic Messages), Radio Text ("Any additional text information"). This allows to build a Service Directory containing services from several broadcast sources together with their attributes. This could be used to select a service which matches a certain programme type ("Pop") or to select a service from a list based on their labels ("SWF3", "Antenne1") and more. Only one audio might run at a time. But additional the Radio Text Slideshow can be run.

A normal TV set allows one client only. One broadcast source (channel) can be selected from several available broadcast sources. One video stream service is provided per broadcast source. Additional information like a Label, Time and ProgrammInfo can be signalled with Videotext. Videotext provides a local-interactive service with text information. Video Processing is built-in and also a Video-Text Decoder is provided if supported, but accessing the pages would require the Service Access block. Service Access allows to navigate on Videotext pages, and slideshow effect is often used for main pages and subpages.

Reception quality is rarely disturbed due to stationary operating and/or cable network.

Broadcast Source Selection is needed to select a channel. It automatically starts the video service. Videotext Access is started on request by the client (Service Selection). Videotext Decoding is maybe started in advance for faster access.

Service Scanning searches for all services (Video Stream and Videotext) and stores them automatically on preset buttons. It would be possible to store them in a Service Directory and offer a channel name list instead of currently used channel numbers.

A special-purpose receiver, e.g. a receiver providing access to any kind of financial information could be based on a standard broadcast system like DAB, but provides access only to specific information.

Several configurations of the broadcast system are possible, e.g. having one hardware receiver only connected to a Server PC and several client applications running on PC Workstations to get access to the information via the local network. The following configurations are possible:
- One or several clients
- One or several broadcast sources
- Several Services with financial information, News Text, News Ticker, Hypertext, News Slideshow, stock data,...
- Broadcast Source Selection is not needed with one broadcast source, but with more than one.
- Service Selection is needed for more than one service and different types (Hypertext, Newsticker),
- Service Multiplex might change
- Service Directory allows flexible Service Multiplex
- Service Scanning not with just one broadcast source
- Reception quality monitoring might be important if e.g. stock prices are provided.

A full DAB and/or DVB system includes the whole functionality of the building blocks described in connection with the preferred exemplary embodiment of the present invention.

In general some building blocks of the Broadcast API are mandatory and some are optional, but this is always related to the question if a support in this field is needed/helpful for the client (application) or not. In case of a system e.g. that provides access to only one broadcast source no broadcast source selection is needed. This does not mean that no broadcast source has to be selected at all. It means that only one broadcast source can be selected and this can be done automatically by the underlying system of the API.

It is obvious that in a full system all building blocks are needed. Depending on the limitation of a real system only a subset is needed. In some simple systems some of the blocks could be removed or that other blocks could be merged, but this is only valid for the functionality. Sometimes it would then be necessary to change the interfaces of the building blocks. As a result new building blocks would be defined.

In general the description will ease the decision if a functionality and therewith the corresponding building block should be mandatory or optional:
- Broadcast Source Selection is needed whenever more than one broadcast source is available and not all services are known from any selected broadcast source. If the information about all services in all other broadcast sources is known, the system may select one broadcast system after startup and gets informed about all available services. In this case Service Selection is sufficient to get access to the services.
- Service Directory is needed when offered services are not known in advance and when the set of offered services can change. In case of several broadcast sources and only a limited signalisation of services in a selected broadcast source, a Service Directory can provide a list of all available services without re-tuning. Clients can be informed about dynamic changes.
- Service Selection is needed when more than one service is available in a broadcast source and to run more than one service concurrently.
- Service Access is needed when data has to be provided to the application for further processing.
- Reception Quality is needed when reception quality can vary while running.
- Service Scanning provides comfort for service selection and allows to build better user interfaces.
- Client Registration is needed when more than one client is using the API and/or interfacing is needed.

Another application of the Broadcast API according to the present invention is to provide only limited access to a client 15. This means e.g. a Java Applet is running as part of a complete DAB Receiver. The access to DAB is controlled by an adapted part of the DAB Receiver, but a Java Applet is e.g. downloaded via DAB and presents a certain data service. Therefore it needs access to the Service Access block and could be not allowed to access any other block.

## Claims

1. Application programming interface (12) that allows a client (4, 15) to access information services provided by a broadcast system, **characterized by**
- a request sub-interface (16) defining all respective functions of building blocks (5, 6, 7, 8, 9, 10, 11) within the appliction programming interface (12) that can be addressed and/or requested by said client (4, 15) via said request sub-interface (16) which functions provide support for processing of information services.

2. Application programming interface (12) according to claim 1, **characterized by**
- a client registration building block (5) that provides a registration and/ or log-off service for said client (15).

3. Application programming interface (12) according to claim 2, **characterized in that**
- said client registration building block (5) provides an individual client identifier to said client (15) that is used in every communication with said client (15) to identify said client (15).

4. Application programming interface (12) according to anyone of the preceding claims, **characterized by**
- a service directory building block (6) that provides information about available services of one or more broadcast sources.

5. Application programming interface (12) according to claim 4, **characterized in that**
- said service directory building block (6) provides information about services belonging to the current and/or at least one other broadcast source that respectively gets updated when the respective broadcast source is visited and/or when a scan command is performed to collect information belonging to several receivable broadcast sources.

6. Application programming interface (12) according to claim 4 or 5, **characterized in that**
- said service directory building block (6) informes a connected client (15) about changes in the service information.

7. Application programming interface (12) according to anyone of the preceding claims, **characterized by**
- a broadcast source selection building block (7) that allows a client (15) to directly tune to a broadcast source or to search at least one broadcast source automatically.

8. Application programming interface (12) according to anyone of the preceding claims, **characterized by**
- a service selection building block (8) that allows to start and/or stop at least one service at a time.

9. Application programming interface (12) according to claim 8, **characterized in that**
- said service selection building block (8) allows to stop all currently running services and start a new service at a time.

10. Application programming interface (12) according to claim 8 or 9, **characterized in that**
- said service selection building block (8) sends an information to a client (15) upon termination of a service selected by said client (15).

11. Application programming interface (12) according to anyone of the preceding claims, **characterized by**
- a service access building block (9) that allows to start and/or stop an access of at least one content of a service at a time.

12. Application programming interface (12) according to to claim 11, **characterized in that**
- said service access building block (9) allows to stop all currently accessed objects within the content of a service and to access a new content of a service at a time.

13. Application programming interface (12) according to claim 11 or 12, **characterized in that**
- said service access building block (9) supports local interactive applications by providing selected information of information objects that are transmitted in a cyclical or repetitive manner.

14. Application programming interface (12) according to anyone of claims 11 to 13, **characterized in that**
- said service access building block (9) supports streaming or slideshow applications by directly presenting received information or by storing received information and present it at a certain predefined time.

15. Application programming interface (12) according to anyone of claims 11 to 14, **characterized in that**
- said service access building block (9) comprises a built-in processing for predetermined applications.

16. Application programming interface (12) according to anyone of the preceding claims, **characterized by**
- a reception quality building block (10) that allows to monitor the reception quality.

17. Application programming interface (12) according to claim 16, **characterized in that**
- said reception quality building block (10) allows a client (15) to subscribe and informs a subscribed client (15) each time the reception conditions change until the subscription is cancelled by the client.

18. Application programming interface (12) according to anyone of the preceding claims, **characterized by**
- a service scanning building block (11) that allows a client (15) to search for all available services in all available broadcast sources of a specified search area.

19. Application programming interface (12) according to claim 18, **characterized in that**
- said service scanning building block (11) updates a service directory included in a service directory building block (6) as defined in anyone of claims 4 to 6.

20. Application programming interface (12) according to claim 18 or 19, **characterized in that**
- said specified search area is a frequency range or are frequency ranges.

21. Application programming interface (12) according to claim 18 or 19, **characterized in that**
- said service scanning building block (11) provides notifications about progress made.

22. Application programming interface (12) according to anyone of the preceding claims, **characterized in that**
- every building block (5, 6, 7, 8, 9, 10, 11) is based on asynchronous messaging.

23. Application programming interface (12) according to anyone of the preceding claims, **characterized in that**
- a command that allows said client (15) to request information services comprises at least
- a request message (Req) sent from said client (15) to the application programming interface (12) to request execution of said command, and
- a confirmation message (Cnf) sent from the application programming interface (12) to said client (15) to confirm the execution of said command.

24. Application programming interface (12) according to claim 23, **characterized in that**
- a command that allows said client (15) to request information services comprises
- a notification message (Ntf) sent from the application programming interface (12) to said client (15) to inform about progress with long lasting commands or to provide requested information to said client (15).

25. Application programming interface (12) according to anyone of the preceding claims, **characterized in that**
- said request sub-interface (16) allows the use of a functional request message.

26. Application programming interface (12) according to anyone of the preceding claims, **characterized in that**
- it provides support for several clients (15) simultaneously.

27. Application programming interface (12) according to anyone of the preceding claims, **characterized in that**
- it provides a restricted support for one or several clients (15).

28. Application programming interface (12) according to anyone of the preceding claims, **characterized in that**
- it provides a caching of received information services.

29. Application programming interface (12) according to claim 28, **characterized in that**
- said caching is dependent on a priority value provided by a client (15).

30. Application programming interface (12) according to anyone of the preceding claims, **characterized by**
- a receiver control block (18) providing a low-level control of a connected broadcast system receiver.

31. Client (15) that can access an application programming interface (12) according to anyone of claims 1 to 30, **characterized by**
- a confirmation and notification sub-interface (17) that is defined by said application programming interface (12) to allow said application programming interface (12) the use of a functional confirmation and/or notification message to said client (15).

32. Client (15) according to claim 31, **characterized in that** it is realized as a software program.

33. Client (15) according to claim 32, **characterized in that** the software program is realized in C, C++ or Java.

34. Use of an application programming interface (12) according to anyone of claims 1 to 30 by a client (15) according to anyone of claims 31 to 33 which is resident in the broadcast receiver.

35. Use of an application programming interface (12) according to anyone of claims 1 to 30 by a client (15) according to anyone of claims 31 to 33 which is downloaded from a channel of a broadcast system into the broadcast receiver.

36. Use of an application programming interface (12) according to anyone of claims 1 to 30 in a DAB, DVB, analog radio or analog television receiver.

37. Use of a client (15) according to anyone of claims 31 to 33 in a DAB, DVB, analog radio or analog television receiver.
